# EUROPEAN PATENT SPECIFICATION

(11) **EP 4 273 034 B1**
(45) Date of publication and mention of the grant of the patent: **19.11.2025**
(21) Application number: 23171390.0
(22) Date of filing: 03.05.2023
(51) Int. Cl.: B62K 3/00, B62K 21/10, A63C 17/01, A63C 17/00, A63C 17/26

(54) **SCOOTER AND KIT OF PARTS**
ROLLER UND TEILESATZ
TROTTINETTE ET KIT DE PIÈCES

(30) Priority: 03.05.2022 NL 2031765
(43) Date of publication of application: 08.11.2023
(73) Proprietor: Berg Toys Beheer B.V., 6716 WB Ede (NL)
(72) Inventor: VAN DEN BERG, Hendrik, 6716 WB Ede (NL); SCHEURWATER, Wijnand Cornelis, 6716 WB Ede (NL); TUINTE, Lyon Anne Martijn, 6716 WB Ede (NL); HEIJBLOM, Erwin Nico, 6716 WB Ede (NL)
(74) Representative: V.O.

(56) References cited:
- WO-A1-2016/034975
- WO-A1-2017/079776
- CA-A1- 2 211 070
- DE-A1- 4 441 642
- US-A- 588 495
- US-A1- 2002 125 670
- US-B1- 6 382 646

## Description

### FIELD

The invention relates to a scooter comprising a steering mechanism configured to be operated by a rider by leaning sideways. The invention also relates to a kit of parts for such a scooter.

### BACKGROUND

Scooters, sometimes called kick scooters or push scooters, are known in various forms, for example as toy-like vehicles for children to ride on as a form of play, or as a personal vehicle providing a mode of transport, e.g. as an alternative to cycling or walking. Scooters generally have an elongate base with one or more rear wheels and one or more front wheels. The base generally provides a deck on which a rider can stand with one leg, while using the other leg to propel the scooter by pushing off the ground. A handle bar is generally provided for the rider to help them balance their weight, in particular laterally. Such balancing not only helps to prevent falling, but may also partly or fully steer the scooter.

In some scooters, the steering is even mainly or exclusively controlled by the rider's lateral balance, i.e. the scooter can be steered left by the rider leaning to the left, or right by leaning to the right. This ability is realized for example by a negative caster angle for the front wheels. To make the scooter go straight, then, the rider needs to maintain their center of gravity at a central position along the scooter's lateral direction.

To support the rider in making the scooter go straight when desired, some scooters with two front wheels employ a steering mechanism with one or more resilient elements which can urge the steering mechanism towards a centered position corresponding to a straight riding direction. There is a need for further improvements in this respect. In particular, a rider can experience such steering mechanisms as loose or unresponsive when riding close to straight, which in turn can cause the rider to feel less secure in using the scooter.
A scooter according to the preamble of claim 1 is disclosed in WO2017/079776 and another prior art example is shown in US6382646 B1.

### SUMMARY

An object of the invention is to provide a scooter which is easier to steer by a rider by leaning sideways. An object is to provide a scooter which better supports a rider in riding straight. An object is to provide a scooter with a more accurate, reliable, durable, versatile and/or secure steering mechanism. An object is to at least provide an alternative scooter, in particular with an alternative steering mechanism. The invention is a scooter according to claim 1 or a kit according to claim 15.

An aspect of the invention provides a scooter having an elongate base, a rear wheel at a trailing end of the base and two front wheels at a leading end of the base. The front wheels are interlinked by a steering mechanism configured to be operated by a rider by leaning sideways. The steering mechanism comprises, for each of the two front wheels, a stub axle to which the respective front wheel is connected, each of the sub axles being rotatably coupled to the base to swivel about a respective kingpin axis. The steering mechanism further comprises a tie bar element mutually coupling the rotations of the stub axles about their kingpin axes, thereby determining a tie bar main movement direction of the tie bar element. The steering mechanism further comprises a resilient element configured to resiliently urge the stub axles towards a centered position corresponding to a straight riding direction of the scooter. The resilient element is arranged to act transverse to the tie bar main movement direction. The steering mechanism further comprises a conversion mechanism arranged to convert the action of the resilient element to a centering action on the stub axles towards the centered position.

It has been found that the combined arrangement of the resilient element and the conversion mechanism advantageously enables the urging towards the centered position to be continuous and relatively precise at the same time. This causes the steering to feel particularly stable yet responsive for the rider, and thereby increases the rider's sense of control. The rider can be continuously supported in returning to and maintaining the centered position, without feeling that the steering becomes 'loose' or unresponsive close to the centered position. Meanwhile, the rider can still conveniently steer the scooter left or right by leaning sideways, thereby acting against the urging direction of the resilient element.

Without wishing to be bound by theory, this improvement of the steering behavior of the scooter is believed to be related to the conversion mechanism enabling a relatively precise centering behavior of the steering mechanism, in particular without depending on the detailed characteristics of the resilient element and its assembly. In steering mechanisms of known scooters, a certain amount of play is typically provided around the centered position so as to allow room for imprecisions while avoiding an eccentric bias in the steering. Without such play, the known mechanisms could feel more stable, but their most stable state would then not necessarily correspond to a completely straight riding direction due to typical imprecisions of the resilient element(s). By now arranging the resilient element to act transverse to the tie bar main movement direction and providing the conversion mechanism, such imprecisions can be effectively decoupled from the centering behavior of the steering mechanism. As a result, the traditional play around the centered position is no longer needed, so that the typical loose feeling close to the centered position can be resolved without thereby risking an eccentric bias.

Optionally, the steering mechanism is configured to constrain the resilient element to act only transverse to the tie bar main movement direction.

In this way, it can be further promoted that the resilient element or its assembly could cause an eccentric bias in the steering mechanism. In the present context, an eccentric bias refers to a tendency of the steering mechanism to return to a stable direction which does not correspond to riding straight, so that the rider feels as if the steering mechanism tries to 'pull' the steering to one side when the rider intends to go straight.

Optionally, for constraining the resilient element, the steering mechanism comprises a slider mechanism defining a slide path which is fixed to the base.

Such a slider mechanism, for example comprising a slider in a slider track, can constrain the resilient element in a relatively simple and robust manner. For example, a slider track may be fixed to the base, wherein the slider is fixed to one end of the resilient element.

The slide path preferably extends transverse to the tie bar main movement direction, thus in accordance with the direction in which the resilient element is configured to act. The slide path may for example extend along a central plane of symmetry of the scooter, in particular to promote a symmetrical centering behavior of the steering mechanism.

According to the invention, the conversion mechanism comprises a guide and a follower arranged to follow the guide.

Such an arrangement can provide a relatively precise conversion, yet with substantial freedom of design regarding details of the conversion such as conversion ratio and conversion direction.

Optionally, the guide is shaped to effect the conversion to the centering action in collaboration with the follower.

In particular, the guide may comprise lateral sections whose main directions extend at an angle to the tie bar main movement direction as well as at an angle to a direction in which the resilient element is arranged, in particular constrained, to act.

Such a lateral section can advantageously convert a force exerted by the resilient element transverse to the tie bar main movement direction to a centering force exerted on the tie bar element along the tie bar main movement direction, in particular when the tie bar element is not in its centered position corresponding to the straight riding direction.

Such lateral sections are preferably mutually symmetrical about a plane corresponding to the centered position, so as to provide symmetrical steering support behavior.

Additionally or alternatively, the guide is preferably shaped to define a stable central position for the follower with respect to the guide, the stable central position corresponding to the centered position of the stub axles.

In this way, the shape of the guide can provide a precise and continuous centering behavior, i.e. wherein the resilient element can continuously urge the stub axles towards a precise centered position corresponding to a straight riding direction. A loose feeling associated with play in the steering mechanism can thus be avoided, regardless of possible imprecisions of the resilient element.

The stable central position is preferably provided by a central position along the guide where the aforementioned lateral sections meet. Thus, the guide may be substantially V-shaped, with the two legs of the V corresponding to the aforementioned lateral sections, and the meeting area of the legs forming a centered position.

According to the invention, the guide is associated with the tie bar element, wherein the follower is associated with the resilient element. Advantageously, the guide is according to the invention formed by the tie bar element, thereby yielding a particularly elegant design in which the tie bar element essentially has a dual function.

Alternatively, in a not claimed example the guide and the tie bar element could be separate components. The guide could then, as an alternative, be associated with the resilient element, wherein the follower would be associated with the tie bar element.

Optionally, the resilient element is pretensioned so as to continue to act when the stub axles are in the centered position.

Such pretensioning, or biasing, of the resilient element can advantageously avoid that the steering feels loose when riding close to straight, in particular by suppressing play in the steering mechanism. The pretensioning can result in the rider having to lean somewhat further sideways from a centered position before the leaning has an effect on the steering. Advantageously, the strength of the pretensioning can be selected to achieve a desired combination between stability when riding straight and a minimal amount of leaning required to effect a steering action. Thus, the strength of the pretensioning can be designed according to preference. In some embodiments, the strength of the pretensioning can thus be chosen to be in the range of 20 N to 100 N, preferably in the range of 30 N to 90 N, more preferably in the range of 40 N to 80 N, for example about 60 N.

Optionally, the resilient element is a coil spring. Alternatively or additionally, the resilient element could comprise a leaf spring, for example.

Preferably, as is known as such for scooters, the kingpin axes are oriented with respect to the base to determine a negative caster angle, in particular in combination with sizes and/or positions of the rear wheel and front wheels. An absolute size of the caster angle may be in the range of 10 to 70 degrees, preferably in the range of 20 to 60 degrees, more preferably in the range of 30 to 50 degrees, for example about 40 degrees.

It has been found that such a size of the negative caster angle can provide a desired level of responsiveness in the steering, in particular in combination with the arrangement of the resilient element and the conversion mechanism as described herein. Moreover, such a caster angle can provide a relatively small turning circle for the scooter, thus allowing the rider to steer the scooter along relatively sharp bends, in particularly without excessive amounts of sideways leaning.

Optionally, the scooter comprises a locking mechanism for selectively locking the steering mechanism in a state corresponding to the straight riding direction.

In this way, if and when desired, the scooter may be locked in a highly stable, in particular fixed, steering configuration, so that the scooter can then essentially only go straight. This may be desired e.g. for young children who lack sufficient self-balancing skills to operate the steering mechanism. Instead, such a child could then stop the scooter and manually reorient it to change its riding direction. Such a locking mechanism can be realized in various ways. For example, a user operable cam could be provided to selectively engage a recess in the tie bar element, thereby locking its position along the tie bar main movement direction.

Preferably, the steering mechanism is free from any steering shaft, in particular so as to be operable only by leaning.

Preferably, the scooter is motorless. Alternatively, an auxiliary motor could be provided, e.g. in the form of an electromotor, so as to reduce a rider's effort in propelling the scooter by pushing off the ground using a leg.

Preferably, the scooter comprises a handle bar for a rider. Handle bars are known as such for scooters. It shall be appreciated that in the present context, such a handle bar need not imply any manual steering. Rather, the handle bar can essentially act as a fixed support structure for the rider to hold on to, in particular to help them balance their weight.

The scooter may be dimensioned for use by young children, in particular from the age of two years. One or more parts of the scooter, e.g. a height of a handle bar, may be adjustable to accommodate a range of rider sizes, e.g. corresponding to a range of children's ages.

A further aspect provides a kit of parts for a scooter as described herein. The kit of parts comprises at least the steering mechanism and the base. Preferably, the kit of parts also comprises the rear wheel and/or the front wheels. The kit may comprise one or more further parts described herein, such as the handle bar. In the kit, such parts may be separate from each other, although some parts may already be assembled together in the kit.

Such a kit provides above mentioned advantages.

### DETAILED DESCRIPTION

In the following, the invention will be explained further using examples of embodiments and drawings, which do not limit the scope of the invention as defined by the claims. The drawings are schematic and merely show examples. In the drawings, corresponding elements have been provided with corresponding reference signs. In the drawings:
Fig. 1 shows a perspective view of a scooter;
Fig. 2 shows a perspective bottom view of the scooter of Fig. 1;
Fig. 3 shows a plan view of a prior art steering mechanism;
Fig. 4 shows a plan view of a steering mechanism according to an embodiment;
Figs. 5A-B show a perspective views of the steering mechanism with the front wheels of the scooter of Figs. 1-2, wherein Fig. 5A shows the steering mechanism in a centered state and Fig. 5B shows the steering mechanism in a non-centered state;
Fig. 6 and 7 show further perspective views of the steering mechanism of Fig. 5A; and
Figs. 8A-B show side views of the base and steering mechanism of the scooter of Figs. 1-2, wherein Fig. 8A shows the steering mechanism in the centered state and Fig. 8B shows the steering mechanism in a non-centered state.

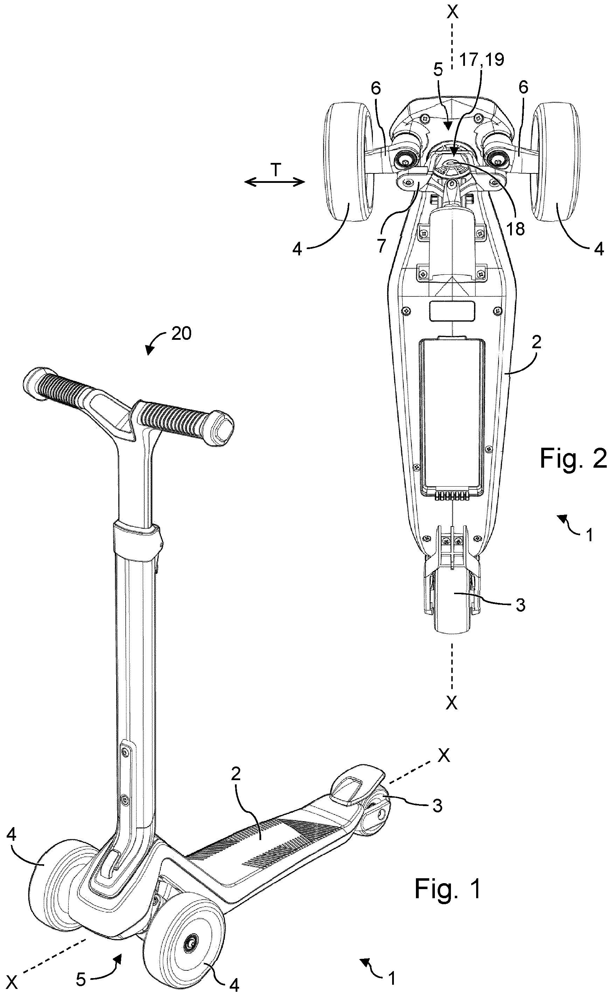

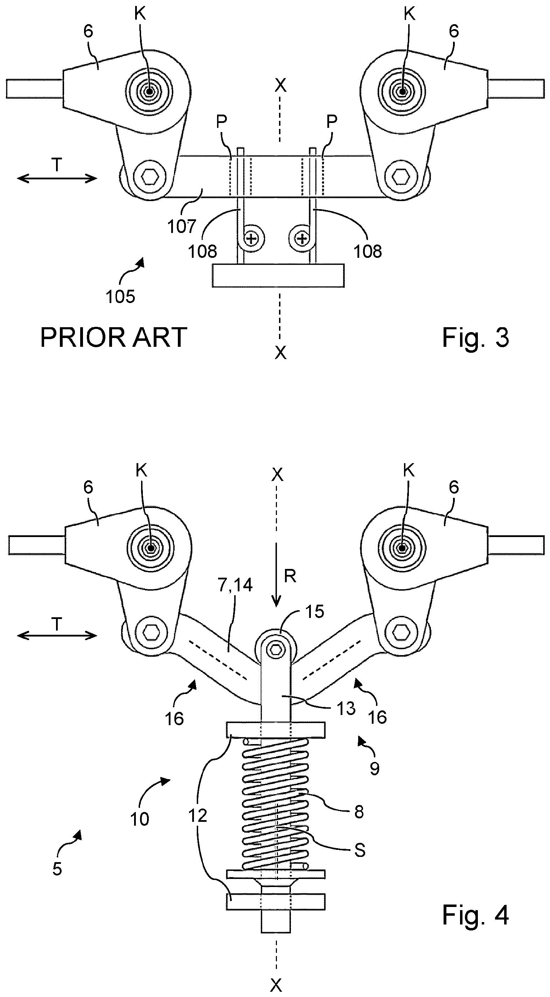

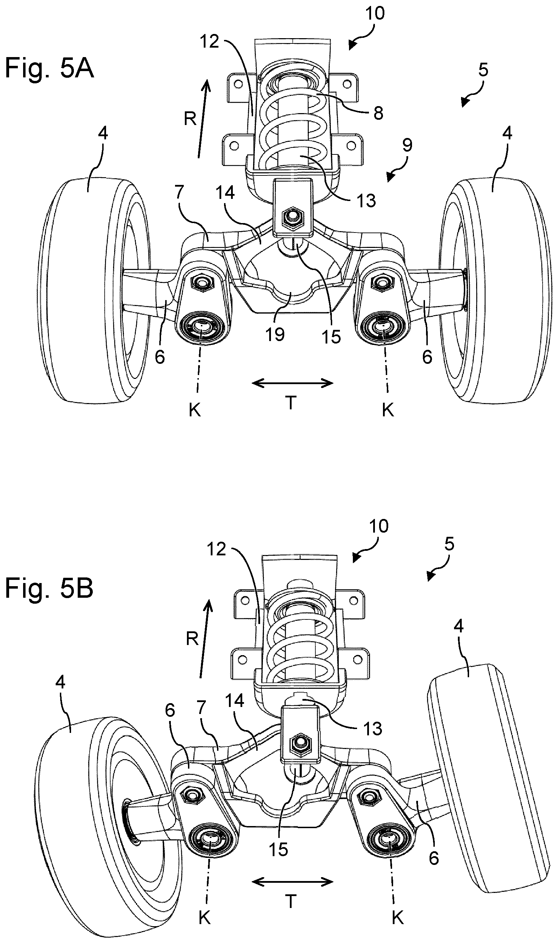

Figs. 1 and 2 show a scooter 1 having an elongate base 2 (with a longitudinal direction indicated by a dashed line X-X), a rear wheel 3 at a trailing end of the base 2 and two front wheels 4 at a leading end of the base 2, the front wheels 4 being interlinked by a steering mechanism 5 configured to be operated by a rider by leaning sideways. The steering mechanism 5 is shown in more detail in Figs. 5A-B, 6, 7 and 8A-B, and highly schematically in Fig. 4.

The steering mechanism 5 comprises, for each of the two front wheels 4, a stub axle 6 to which the respective front wheel 4 is connected, each of the sub axles 6 being rotatably coupled to the base 2 to swivel about a respective kingpin axis K. The kingpin axes K are here fixed with respect to the base 2.

The steering mechanism 5 comprises a tie bar element 7 mutually coupling the rotations of the stub axles 6 about their kingpin axes K, thereby determining a tie bar main movement direction T of the tie bar element 7. To that end the tie bar element 7 is here connected to the stub axles 6 at connecting positions which are spaced apart from the respective king pin axes K. The tie bar main movement direction T is here shown as a direction perpendicular to the longitudinal direction of the base 2, in particular a horizontal left-right direction during use.

The steering mechanism 5 comprises a resilient element 8 configured to resiliently urge the stub axles 6 towards a centered position corresponding to a straight riding direction of the scooter 1, i.e. parallel to the longitudinal direction X-X of the base 2.

The resilient element 8, here a coil spring, is arranged to act along a resilient element action direction R which is transverse to the tie bar main movement direction T.

The steering mechanism 5 comprises a conversion mechanism 9 arranged to convert the action of the resilient element 8 to a centering action on the stub axles 6 towards the centered position.

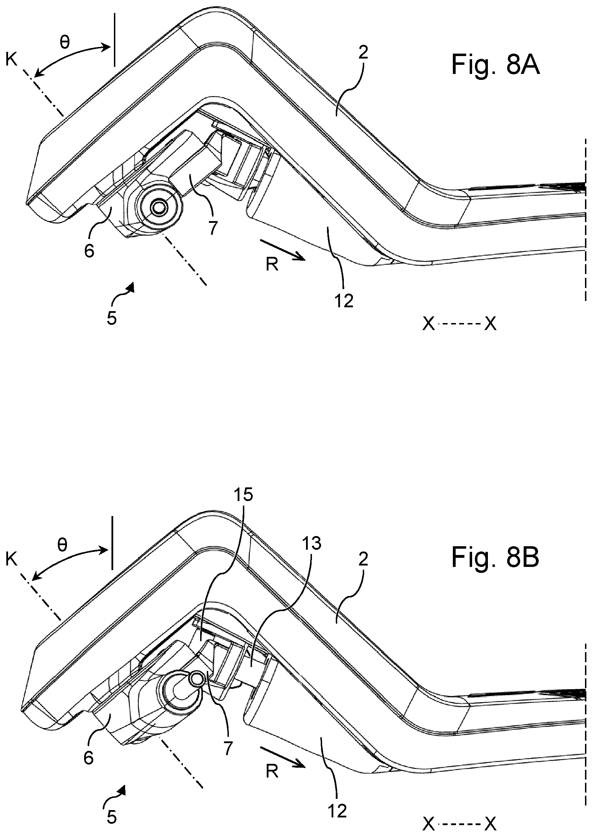

Figs. 1, 2, 4, 5A, 6, 7 and 8A show the centered position of the stub axles 6, and more generally of the steering mechanism 5, corresponding to the straight riding direction of the scooter 1. By contrast, Figs. 5B and 8B show a non-centered position, thus corresponding to a non-straight riding direction of the scooter 1. By comparing e.g. Fig. 5B to Fig. 5A, it can be seen that the shown positions differ by a rotation of the stub axles 6 about their kingpin axes K.

For comparison, Fig. 3 shows a steering mechanism 105 of a prior art scooter, wherein it can be seen that two resilient elements 108 are arranged to act in line with the tie bar main movement direction T of the tie bar element 107. Also, this prior art steering mechanism 105 is configured to provide an amount of play P in the form of a range of positions around the shown centered position in which the resilient elements 108 do not act on the tie bar element 107. This play P provides a tolerance in the steering mechanism 105 to allow the scooter to be ridden straight despite possible imprecisions, e.g. in the resilient elements 108. However, at the same time, this play P tends to make the steering feel loose when riding the scooter close to straight.

By contrast, in a steering mechanism 5 according to the present invention, the combined arrangement of the resilient element 8 and the conversion mechanism 9 allows the scooter 1 to be ridden straight reliably, without such a loose feeling, as also explained in the summary section.

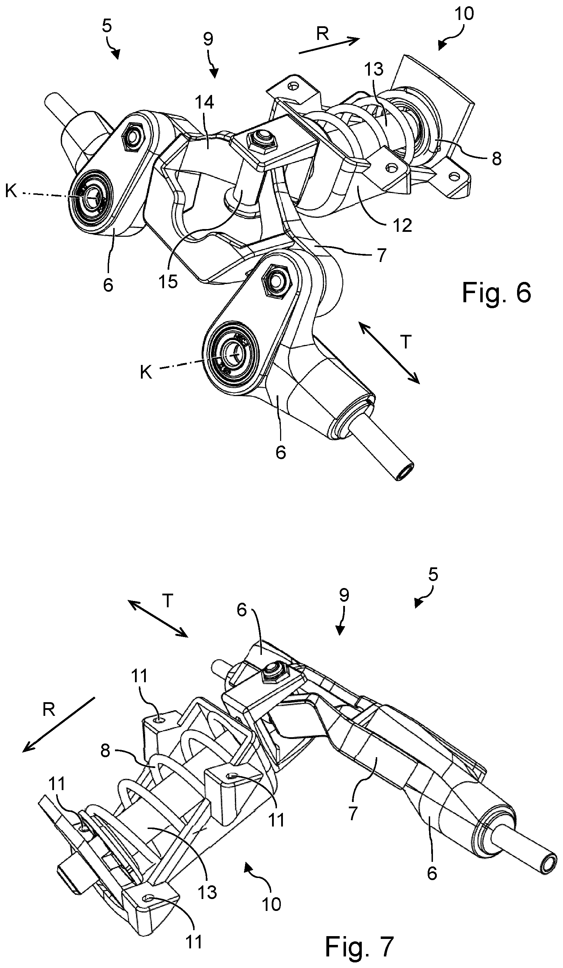

In the shown examples, the steering mechanism 5 is configured to constrain the resilient element 8 to act only transverse to the tie bar main movement direction. In particular, for constraining the resilient element 8, the steering mechanism 5 here comprises a slider mechanism 10 defining a slide path S which is fixed to the base 2, e.g. using fastening means (not shown) which engage suitably arranged openings 11 as indicated in Fig. 7. Here, the slider mechanism 10 comprises a slider track 12 and a slider 13, wherein the slider 13 is fixed to an end of the resilient element 8.

The conversion mechanism 9 here comprises a guide 14 and a follower 15 arranged to follow the guide 14. In the shown examples, the guide 14 is formed by the tie bar element 7 and the follower 15 is arranged at an end of the slider 13 which is associated with the resilient element 8. The follower 15 here comprises a roller, by way of example only. However, different configurations are possible. For example, the guide and the tie bar element could be separate elements, and/or the guide could be associated with the resilient element.

As seen particularly well in Fig. 4, the guide 14 is here shaped to effect the conversion to the centering action in collaboration with the follower 15. In particular, the guide 14 is here substantially V-shaped, comprising lateral sections 16 whose main directions (indicated by dashed lines in Fig. 4) extend at an angle to the tie bar main movement direction T as well as at an angle to a direction R in which the resilient element 8 is arranged to act. Where the lateral sections 16 meet, the shown guide 14 is shaped to define a stable central position for the follower 15 with respect to the guide 14, the stable central position corresponding to the centered position of the stub axles 6. At the outer ends of the lateral sections 16, the tie bar element 7 here hingeably connects to the stub axles 6 by connectors spaced apart from the respective king pin axes K.

In Figs. 5A-B, 6 and 7, it can be seen that the tie bar element 7 may comprise such a V-shape in addition to one or more further shapes, whereby for example the outer ends of the V may be bridged, i.e. the tie bar element 7 may additionally form a connection between the outer ends of the V otherwise than via the legs of the V.

In the shown examples, the resilient element 8 is pretensioned so as to continue to act when the stub axles are in the centered position. Thus, the resilient element 8 here acts on the guide 14 formed by the tie bar element 7 not only in case of an eccentric steering position (see e.g. Fig. 5B), but also when the steering mechanism 5 is centered (see e.g. Fig. 5A).

In the shown examples, the strength of the pretensioning is essentially fixed by the construction of the steering mechanism 5 in combination with the spring characteristics of the resilient element 8. In a possible alternative configuration (not shown), the strength of the pretensioning could be adjustable by a user, in particular also after assembly of the scooter. For example, a tension adjustment mechanism could be provided as part of the steering mechanism, in particular as part of the slider mechanism. Such a tension adjustment mechanism could be used e.g. by adults to reduce or increase the pretensioning in a step-by-step manner as the child develops their balancing skills over time. Still, at least some level of pretensioning is preferably maintained so as to avoid a loose feeling in the steering, as explained.

The strength of the action of the resilient element 8 preferably increases, in particular gradually, as the steering position becomes more eccentric. In the shown examples, this is realized by the lateral sections 16 of the guide 14 gradually sloping away from a stabilizing center of the guide 14.

With particular reference to Figs. 8A-B, the kingpin axes K are here oriented with respect to the base 2 to determine a negative caster angle θ, in particular in combination with sizes and/or positions of the rear wheel 3 and front wheels 4. In the shown example, the caster angle θ has an absolute size of about 40 degrees. However, different caster angles are possible.

The steering mechanism 5 is here free from any steering shaft, in particular so as to be operable only by leaning. Although the shown scooter 1 comprises a handle bar 20, this handle bar 20 does not operate the steering mechanism 5 but rather remains essentially fixed with respect to the base 2 regardless of the steering.

The shown scooter 1 is motorless, although an auxiliary motor, e.g. an electromotor, could be provided if desired, e.g. with a transmission to the rear wheel 3.

The shown scooter 1 is dimensioned for use by young children, in particular from the age of two years. The dimensioning includes in particular that the handle bar 20, which does not operate the steering mechanism 5, can be adjusted to a sufficiently low position. Also, the steering mechanism 5 may be designed to be operable by a child, i.e. with relatively little body weight and relatively little sideways leaning compared to what an adult rider could realize. The preferred pretensioning of the resilient element 8 may be chosen accordingly, i.e. with a sufficiently small strength so that a child can overcome the pretensioning force when steering the scooter 1 by leaning sideways.

With reference to Fig. 2, the scooter 1 here comprises a locking mechanism 17 for selectively locking the steering mechanism 5 in a state corresponding to the straight riding direction, for example for very young children whose parents may prefer the steering mechanism to be locked in view of the child's limited balancing skills.

Fig. 2 shows an exemplary locking mechanism 5 in a locked state, wherein a manually rotatable cam 18 extends in a recess 19 formed in the tie bar element 7. By rotating the cam 18 out of the recess 19, e.g. by about 180 degrees about a substantially vertical axis, the tie bar element 7 can be released to move along the tie bar main movement direction T. As one possible alternative, a locking mechanism could act on the slider mechanism 10, for example.

The shown scooter 1 may be assembled from a suitable kit of parts, for example comprising the steering mechanism 5, the base 2, the rear wheel 3, the front wheels 4 and the handle bar 20, for example separate from each other in the kit.

Many variations, extensions and combinations are possible, as will be appreciated by the skilled person. For example, a scooter may be provided with two rear wheels, e.g. axially adjacent to each other and possibly acting essentially as one wheel. A breaking mechanism may be provided, e.g. with a breaking pedal at the rear wheel. A steering mechanism may comprise a plurality of resilient elements, e.g. arranged in series and/or in parallel. Further examples have been provided throughout the description. All such variants are included within the scope of the invention as defined by the claims.

### LIST OF REFERENCE SIGNS

- 1.: Scooter
- 2.: Base
- 3.: Rear wheel
- 4.: Front wheel
- 5.: Steering mechanism
- 6.: Stub axle
- 7.: Tie bar element
- 8.: Resilient element
- 9.: Conversion mechanism
- 10.: Slider mechanism
- 11.: Opening for fastening means
- 12.: Slider track
- 13.: Slider
- 14.: Guide
- 15.: Follower
- 16.: Lateral section
- 17.: Locking mechanism
- 18.: Cam
- 19.: Recess
- 20.: Handle bar
- 105.: Prior art steering mechanism
- 107.: Prior art tie bar element
- 108.: Prior art resilient element
- K.: Kingpin axis
- P.: Play in prior art steering mechanism
- R.: Resilient element action direction
- S.: Slide path
- T.: Tie bar main movement direction
- X-X.: Longitudinal direction of base
- θ.: Caster angle

## Claims

1. Scooter (1) having an elongate base (2), a rear wheel (3) at a trailing end of the base (2) and two front wheels (4) at a leading end of the base (2), the front wheels (4) being interlinked by a steering mechanism (5) configured to be operated by a rider by leaning sideways, wherein the steering mechanism (5) comprises:
- for each of the two front wheels (4), a stub axle (6) to which the respective front wheel (4) is connected, each of the stub axles (6) being rotatably coupled to the base (2) to swivel about a respective kingpin axis (K);
- a tie bar element (7) mutually coupling the rotations of the stub axles (6) about their kingpin axes (K), thereby determining a tie bar main movement direction of the tie bar element;
- a resilient element (8) configured to resiliently urge the stub axles (6) towards a centered position corresponding to a straight riding direction of the scooter (1), wherein the resilient element (8) is arranged to act transverse to the tie bar main movement direction (T); and
- a conversion mechanism (9) arranged to convert the action of the resilient element (8) to a centering action on the stub axles (6) towards the centered position, **characterized in that** the conversion mechanism (9) comprises a guide (14) and a follower (15) arranged to follow the guide (14), wherein the guide is associated with the tie bar element (7), wherein the follower is associated with the resilient element, wherein the guide is formed by the tie bar element.

2. Scooter according to claim 1, wherein the steering mechanism (5) is configured to constrain the resilient element (8) to act only transverse to the tie bar main movement direction (T).

3. Scooter according to claim 2, wherein, for constraining the resilient element (8), the steering mechanism (5) comprises a slider mechanism (10) defining a slide path S which is fixed to the base (2).

4. Scooter according to anyone of claims 1 - 3, wherein the guide (14) is shaped to effect the conversion to the centering action in collaboration with the follower (15).

5. Scooter according to claim 4, wherein, to effect the conversion, the guide (14) comprises lateral sections (16) whose main directions extend at an angle to the tie bar main movement direction (T) as well as at an angle to a direction (R) in which the resilient element is arranged, in particular constrained, to act.

6. Scooter according to claim 4 or 5, wherein the guide (14) is shaped to define a stable central position for the follower (15) with respect to the guide (14), the stable central position corresponding to the centered position of the stub axles (6).

7. Scooter according to any of the preceding claims, wherein the resilient element (8) is pretensioned so as to continue to act when the stub axles (6) are in the centered position.

8. Scooter according to any of the preceding claims, wherein the resilient element (8) is a coil spring.

9. Scooter according to any of the preceding claims, wherein the kingpin axes (K) are oriented with respect to the base (2) to determine a negative caster angle θ, in particular in combination with sizes and/or positions of the rear wheel (3) and front wheels (4).

10. Scooter according to claim 9, wherein an absolute size of the caster angle θ is in the range of 10 to 70 degrees, preferably in the range of 20 to 60 degrees, more preferably in the range of 30 to 50 degrees, for example about 40 degrees.

11. Scooter according to any of the preceding claims, comprising a locking mechanism (17) for selectively locking the steering mechanism (5) in a state corresponding to the straight riding direction.

12. Scooter according to any of the preceding claims, wherein the steering mechanism (5) is free from any steering shaft, in particular so as to be operable only by leaning.

13. Scooter according to any of the preceding claims, wherein the scooter (1) is motorless.

14. Scooter according to any of the preceding claims, wherein the scooter (1) is dimensioned for use by young children, in particular from the age of two years.

15. Kit of parts for a scooter (1) according to any of the preceding claims, comprising at least the steering mechanism (5) and the base (2), both as defined in claim 1,and preferably further comprising the rear wheel (3) and/or the front wheels (4), said parts may be assembled or separated from each other in the kit.

## Patentansprüche

1. Roller (1) mit einer länglichen Basis (2), einem Hinterrad (3) an einem hinteren Ende der Basis (2) und zwei Vorderrädern (4) an einem vorderen Ende der Basis (2), wobei die Vorderräder (4) durch einen Lenkmechanismus (5) miteinander verbunden sind, der so konfiguriert ist, dass er von einem Fahrer durch seitliches Lehnen betätigt wird, wobei der Lenkmechanismus (5) Folgendes umfasst:
- für jedes der beiden Vorderräder (4) einen Achsschenkel (6), mit dem das jeweilige Vorderrad (4) verbunden ist, wobei jeder der Achsschenkel (6) drehbar mit der Basis (2) verbunden ist, um um eine jeweilige Achsschenkelbolzenachse (K) zu schwenken;
- ein Verbindungsstangenelement (7), das die Drehungen der Achsschenkel (6) um ihre Achsschenkelbolzenachsen (K) miteinander koppelt und dadurch eine Verbindungsstangen-Hauptbewegungsrichtung des Verbindungsstangenelements bestimmt;
- ein federndes Element (8), das so konfiguriert ist, dass es die Achsschenkel (6) federnd in Richtung einer zentrierten Position drückt, die einer geraden Fahrtrichtung des Rollers (1) entspricht, wobei das federnde Element (8) so angeordnet ist, dass es quer zur Verbindungsstangen-Hauptbewegungsrichtung (T) wirkt; und
- einen Umwandlungsmechanismus (9), der so angeordnet ist, dass er die Wirkung des federnden Elements (8) in eine Zentrierwirkung auf die Achsschenkel (6) in Richtung der zentrierten Position umwandelt, **dadurch gekennzeichnet, dass** der Umwandlungsmechanismus (9) eine Führung (14) und ein Folgeelement (15) umfasst, der so angeordnet ist, dass er der Führung (14) folgt, wobei die Führung mit dem Verbindungsstangenelement (7) verbunden ist, wobei das Folgeelement mit dem federnden Element verbunden ist, wobei die Führung durch das Verbindungsstangenelement gebildet ist.

2. Roller nach Anspruch 1, wobei der Lenkmechanismus (5) so konfiguriert ist, dass er das federnde Element (8) so einschränkt, dass es nur quer zur Verbindungsstangen-Hauptbewegungsrichtung (T) wirkt.

3. Roller nach Anspruch 2, **dadurch gekennzeichnet, dass** der Lenkmechanismus (5) zum Einspannen des federnden Elements (8) einen Gleitmechanismus (10) umfasst, der einen Gleitweg S definiert, der an der Basis (2) befestigt ist.

4. Roller nach einem der Ansprüche 1 bis 3, wobei die Führung (14) so geformt ist, dass sie im Zusammenwirken mit dem Folgeelement (15) die Umwandlung der Zentrierwirkung bewirkt.

5. Roller nach Anspruch 4, wobei die Führung (14) zum Bewirken der Umwandlung seitliche Abschnitte (16) aufweist, deren Hauptrichtungen sowohl in einem Winkel zur Verbindungsstangen-Hauptbewegungsrichtung (T) als auch in einem Winkel zu einer Richtung (R) verlaufen, in der das federnde Element angeordnet, insbesondere eingespannt ist.

6. Roller nach Anspruch 4 oder 5, wobei die Führung (14) so geformt ist, dass sie eine stabile Mittelposition für das Folgeelement (15) in Bezug auf die Führung (14) definiert, wobei die stabile Mittelposition der zentrierten Position der Achsschenkel (6) entspricht.

7. Roller nach einem der vorhergehenden Ansprüche, wobei das federnde Element (8) so vorgespannt ist, dass es weiter wirkt, wenn sich die Achsschenkel (6) in der Mittelstellung befinden.

8. Roller nach einem der vorhergehenden Ansprüche, wobei das federnde Element (8) eine Schraubenfeder ist.

9. Roller nach einem der vorhergehenden Ansprüche, wobei die Achsschenkelbolzenachsen (K) in Bezug auf die Basis (2) ausgerichtet sind, um einen negativen Nachlaufwinkel θ zu bestimmen, insbesondere in Kombination mit den Größen und/oder Positionen des Hinterrades (3) und der Vorderräder (4).

10. Roller nach Anspruch 9, wobei eine absolute Größe des Nachlaufwinkels θ im Bereich von 10 bis 70 Grad, vorzugsweise im Bereich von 20 bis 60 Grad, besonders bevorzugt im Bereich von 30 bis 50 Grad, zum Beispiel etwa 40 Grad liegt.

11. Roller nach einem der vorhergehenden Ansprüche, mit einem Verriegelungsmechanismus (17) zum selektiven Verriegeln des Lenkmechanismus (5) in einem Zustand, der der Geradeausfahrtrichtung entspricht.

12. Roller nach einem der vorhergehenden Ansprüche, wobei der Lenkmechanismus (5) frei von jeder Lenkwelle ist, insbesondere so, dass er nur durch Lehnen betätigt werden kann.

13. Roller nach einem der vorhergehenden Ansprüche, wobei der Roller (1) motorlos ist.

14. Roller nach einem der vorhergehenden Ansprüche, wobei der Roller (1) für die Benutzung durch Kleinkinder, insbesondere ab dem Alter von zwei Jahren, dimensioniert ist.

15. Bausatz für einen Roller (1) nach einem der vorhergehenden Ansprüche, der mindestens den Lenkmechanismus (5) und die Basis (2), beide wie in Anspruch 1 definiert, umfasst und vorzugsweise ferner das Hinterrad (3) und/oder die Vorderräder (4) umfasst, wobei diese Teile im Bausatz zusammengesetzt oder voneinander getrennt sein können.

## Revendications

1. Trottinette (1) ayant une base allongée (2), une roue arrière (3) au niveau d'une extrémité de fuite de la base (2) et deux roues avant (4) au niveau d'une extrémité d'attaque de la base (2), les roues avant (4) étant interconnectées par un mécanisme de direction (5) configuré pour être actionné par un conducteur qui se penche sur le côté, dans laquelle le mécanisme de direction (5) comprend :
pour chacune des deux roues avant (4), un porte-fusée (6) auquel la roue avant (4) respective est raccordée, chacun des porte-fusées (6) étant couplé, en rotation, à la base (2) pour pivoter autour d'un axe de pivot de fusée (K) ;
un élément de tirant (7) couplant mutuellement les rotations des porte-fusées (6) autour de leurs axes de pivot de fusée (K), déterminant ainsi une direction de mouvement principal de tirant de l'élément de tirant ;
un élément résilient (8) configuré pour pousser, de manière résiliente, les porte-fusées (6) vers une position centrée correspondant à une direction de circulation droite de la trottinette (1), dans laquelle l'élément résilient (8) est agencé pour agir transversalement par rapport à la direction de mouvement principal de tirant (T) ; et
un mécanisme de conversion (9) agencé pour convertir l'action de l'élément résilient (8) en une action de centrage sur les porte-fusées (6) vers la position centrée, **caractérisé en ce que** le mécanisme de conversion (9) comprend un guide (14) et un poussoir de came (15) agencé pour suivre le guide (14), dans lequel le guide est associé avec l'élément de tirant (7), dans laquelle le poussoir de came est associé à l'élément résilient, dans laquelle le guide est formé par l'élément de tirant.

2. Trottinette selon la revendication 1, dans laquelle le mécanisme de direction (5) est configuré pour contraindre l'élément résilient (8) à agir uniquement transversalement par rapport à la direction de mouvement principal de tirant (T).

3. Trottinette selon la revendication 2, dans laquelle, pour contraindre l'élément résilient (8), le mécanisme de direction (5) comprend un mécanisme de glissière (10) définissant une trajectoire de glissement S qui est fixée à la base (2).

4. Trottinette selon l'une quelconque des revendications 1 à 3, dans laquelle le guide (14) est formé pour effectuer la conversion en action de centrage en collaboration avec le poussoir de came (15).

5. Trottinette selon la revendication 4, dans laquelle, pour effectuer la conversion, le guide (14) comprend des sections latérales (16) dont les directions principales s'étendent à un angle par rapport à la direction de mouvement principal de tirant (T) ainsi qu'à un angle par rapport à une direction (R) dans laquelle l'élément résilient est agencé, en particulier contraint, pour agir.

6. Trottinette selon la revendication 4 ou 5, dans laquelle le guide (14) est formé pour définir une position centrale stable pour le poussoir de came (15) par rapport au guide (14), la position centrale stable correspondant à la position centrée des porte-fusées (6).

7. Trottinette selon l'une quelconque des revendications précédentes, dans laquelle l'élément résilient (8) est pré-tendu afin de continuer à agir, lorsque les porte-fusées (6) sont dans la position centrée.

8. Trottinette selon l'une quelconque des revendications précédentes, dans laquelle l'élément résilient (8) est un ressort hélicoïdal.

9. Trottinette selon l'une quelconque des revendications précédentes, dans laquelle les axes de pivot de fusée (K) sont orientés par rapport à la base (2) afin de déterminer un angle de chasse négatif θ, en particulier en combinaison avec les tailles et/ou les positions de la roue arrière (3) et des roues avant (4).

10. Trottinette selon la revendication 9, dans laquelle une taille absolue de l'angle de chasse θ est dans la plage de 10 à 70 degrés, de préférence dans la plage de 20 à 60 degrés, encore de préférence dans la plage de 30 à 50 degrés, par exemple d'environ 40 degrés.

11. Trottinette selon l'une quelconque des revendications précédentes, comprenant un mécanisme de verrouillage (17) pour verrouiller sélectivement le mécanisme de direction (5) dans un état correspondant à la direction de circulation droite.

12. Trottinette selon l'une quelconque des revendications précédentes, dans laquelle le mécanisme de direction (5) est dépourvu d'arbre de direction, en particulier afin d'être opérationnel uniquement lorsque l'on se penche.

13. Trottinette selon l'une quelconque des revendications précédentes, dans laquelle la trottinette (1) est dépourvue de moteur.

14. Trottinette selon l'une quelconque des revendications précédentes, dans laquelle la trottinette (1) est dimensionnée pour être utilisée par de jeunes enfants, en particulier de l'âge de deux ans.

15. Kit de pièces pour une trottinette (1) selon l'une quelconque des revendications précédentes, comprenant au moins le mécanisme de direction (5) et la base (2), les deux tels que définis dans la revendication 1, et de préférence comprenant en outre une roue arrière (3) et/ou les roues avant (4), lesdites pièces peuvent être assemblées ou séparées les unes des autres dans le kit.
